# EUROPÄISCHE PATENTSCHRIFT

(11) **EP 3 768 566 B1**
(45) Veröffentlichungstag und Bekanntmachung des Hinweises auf die Patenterteilung: **06.04.2022**
(21) Anmeldenummer: 19710327.8
(22) Anmeldetag: 28.02.2019
(51) Int. Cl.: B61H 5/00, F16D 65/12

(54) **VERFAHREN ZUR VERRINGERUNG DER SCHIRMUNG EINER RADBREMSSCHEIBE FÜR EIN SCHIENENFAHRZEUG UND VORRICHTUNG ZUR DURCHFÜHRUNG DES VERFAHRENS**
METHOD AND APAPRATUS FOR STRAIGHTENING OF WORN RAIL VEHICLE BRAKE DISCS
PROCEDE ET APPAREIL DE LISSAGE D'UN DISQUE DE FREIN FERROVIAIRE

(30) Priorität: 21.03.2018 DE 102018106609
(43) Veröffentlichungstag der Anmeldung: 27.01.2021
(73) Patentinhaber: KNORR-BREMSE Systeme für Schienenfahrzeuge GmbH, 80809 München (DE)
(72) Erfinder: MOSBACH, Christian, 82239 Alling (DE); HÄMMERL, Bernhard, 82216 Maisach (DE); ELSTORPFF, Marc-Gregory, 80368 München (DE); VOLK, Thomas, 88250 Weingarten (DE)
(86) Internationale Anmeldenummer: PCT/EP2019/055048
(87) Internationale Veröffentlichungsnummer: WO 2019/179746

(56) Entgegenhaltungen:
- EP-A1- 0 525 415
- EP-A1- 3 208 351
- US-A- 4 006 803

## Beschreibung

Die vorliegende Erfindung betrifft ein Verfahren zur Verringerung der infolge von Bremsvorgängen aufgetretenen Schirmung einer Radbremsscheibe für ein Schienenfahrzeug. Die Erfindung betrifft des Weiteren eine Vorrichtung zur Durchführung eines solchen Verfahrens.

Solche Radbremsscheiben für Schienenfahrzeuge werden beidseits eines Schienenrades eines Schienenfahrzeugs mit einer Vielzahl von umfänglich verteilten Durchgangsschrauben befestigt.

Die Radbremsscheibe wird durch die Verschraubung an dem Radkörper gehalten.

Die Herstellung solcher Radbremsscheiben kann dabei beispielsweise durch ein aus der EP 3 208 351 A1 beschriebenes Verfahren erfolgen.

Insbesondere bei sogenannten Notfallbremsungen kommt es zu starken Temperaturerhöhungen der Radbremsscheibe, was zu einer tellerförmigen Verformung der Bremsscheibe führt. Ein solches Verformungsverhalten wird auch als Schirmung bezeichnet. Eine solche Schirmung der Radbremsscheibe kann nach längerer Laufzeit zu Dickenschwankungen oder auch lokalen hohen thermischen Belastungen führen, die möglichst zu vermeiden sind.

Durch die Verschraubung kann es im angezogenen Zustand der Radbremsscheibe am Schienenrad nur zu einer gering ausgeprägten Schirmung kommen, da die zur Verschraubung eingesetzten Dehnschrauben die Radbremsscheibe in ihrer Ausgangsform weitgehend halten.

Bei Radbremsscheiben von Schienenfahrzeugen sind die Standzeiten der Radbremsscheiben oft erheblich größer als die Standzeiten der Schienenräder, so dass teilverschlissene Radbremsscheiben von einem verschlissenen Schienenrad auf ein neues Schienenrad montiert werden.

Eine solche Wiedermontage ist technisch jedoch nur bis zu einem gewissen Maß an Schirmung der Radbremsscheiben möglich und zulässig.

Zur Verringerung einer solchen infolge von Bremsvorgängen aufgetretenen Schirmung einer Radbremsscheibe ist es aus dem Stand der Technik bekannt, die Reibfläche der Radbremsscheibe zu überdrehen, um vorhandene oberflächennahe Eigenspannungen der Radbremsscheibe zu reduzieren. Dadurch ist ermöglicht, eine Restschirmung der Radbremsscheibe bei der Verschraubung der Radbremsscheibe am Schienenrad zu beseitigen.

Problematisch ist, wenn die Schirmung der Radbremsscheibe ein Maß an Schirmung übersteigt, das durch Überdrehen nicht so weit reduzierbar ist, dass durch Verschrauben der Radbremsscheibe eine plane Reibfläche zu erreichen ist.

Aufgabe der vorliegenden Erfindung ist es, ein Verfahren zur Verringerung der Schirmung einer Radbremsscheibe für ein Schienenfahrzeug bereitzustellen, mit dem auch Radbremsscheiben mit größeren Schirmungswerten wiederverwendet werden können.

Weitere Aufgabe der Erfindung ist es, eine Vorrichtung zur Durchführung eines solchen Verfahrens bereitzustellen.

Die erste Aufgabe wird durch ein Verfahren zur Verringerung der infolge von Bremsvorgängen aufgetretenen Schirmung einer Radbremsscheibe für ein Schienenfahrzeug mit den Merkmalen des Anspruchs 1 gelöst.

Die zweite Aufgabe wird durch eine Vorrichtung zur Durchführung eines solchen Verfahrens mit den Merkmalen des Anspruchs 8 gelöst.

Bei dem erfindungsgemäßen Verfahren wird nach Feststellen einer Abweichung einer Reibfläche der Radbremsscheibe aus einer durch einen Umfangsrand der Reibfläche aufgespannten Ebene die Reibfläche der Radbremsscheibe in die durch den Umfangsrand der Reibfläche aufgespannten Ebene dauerhaft zurückverformt.

Mit einem solchen Verfahren ist es ermöglicht, die durch die bei einem Bremsvorgang entstandene Hitze erzeugten Eigenspannungen der Radbremsscheibe in mechanischer Weise durch Überdrücken der Radbremsscheibe in einer der entstandenen Schirmung entgegengesetzten Richtung mechanisch zurückzuverformen.

Dadurch kann die Wiedermontagerate teilverschlissener Radbremsscheiben deutlich erhöht werden.

Gemäß einer vorteilhaften Ausführungsvariante weist das erfindungsgemäße Verfahren die folgenden Verfahrensschritte auf:
a) Einlegen der Radbremsscheibe in einen Unterstempel;
b) Absenken eines Oberstempels auf eine radial innere Teilfläche der Reibfläche der Radbremsscheibe, bis die radial innere Teilfläche der Reibfläche der Radbremsscheibe in die durch den Umfangsrand der Reibfläche aufgespannten Ebene zurückverformt ist.

Gemäß einer weiteren vorteilhaften Ausführungsvariante erfolgt vor Schritt a) ein Ausrichten des Unterstempels derart, dass eine Auflagefläche des Unterstempels umgekehrt zur Schirmung der Radbremsscheibe eine Mulde ausbildet, wobei die Tiefe der Mulde in Abhängigkeit von der Abweichung der Reibfläche der Radbremsscheibe aus der durch den Umfangsrand der Reibfläche aufgespannten Ebene eingestellt wird.

Gemäß einer weiteren vorteilhaften Ausführungsvariante erfolgt das Ausrichten eines zweiteiligen Unterstempels mit einer kreis- oder kreisförmigen Innenauflage und einem die Innenauflage umschließenden Außenring derart, dass eine ringförmige Lagerfläche des Außenrings gegenüber der Innenauflage um ein dem gemessenen Schirmungs- bzw. Tellerungsmaß angepasstes Maß erhöht ist.

Ein solcher zweiteiliger Unterstempel ist kostengünstig herstellbar und erlaubt in einem einfachen Verfahrensschritt, die Tiefe der Überdrückung in einfacher Weise einzustellen, so dass dadurch ein weggesteuertes Überdrücken ermöglicht wird.

Gemäß einer weiteren vorteilhaften Ausführungsvariante wird in Schritt b) der Oberstempel auf den radial inneren Randbereich der Reibfläche der Radbremsscheibe so weit abgesenkt, bis der radial innere Randbereich der Reibfläche der Radbremsscheibe auf der Innenauflage aufliegt.

Durch ein solches zeitlich begrenztes Überdrücken der Radbremsscheibe lassen sich die Eigenspannungen der Radbremsscheibe so weit reduzieren, dass ein anschließendes Festschrauben der teilverschlissenen Radbremsscheibe am Rad des Schienenfahrzeugs wieder ermöglicht ist.

Gemäß einer weiteren vorteilhaften Ausführungsvariante ist es auch denkbar, die Abweichung der Reibfläche der Radbremsscheibe aus einer durch einen Umfangsrand der Reibfläche aufgespannten Ebene vorab zu messen.

Gemäß einer weiteren vorteilhaften Ausführungsvariante ist es auch denkbar, vor Schritt a) die Reibfläche der Radbremsscheibe zur Reduzierung von oberflächennahen Eigenspannungen zusätzlich spanend vorzubearbeiten.

Dadurch ist ermöglicht, auch Radbremsscheiben mit stärkerer Schirmung durch die spanende Bearbeitung der Reibfläche der Radbremsscheibe so vorzubearbeiten, dass bei der anschließenden Überdrückung die Schirmung der Radbremsscheibe auf ein zulässiges Maß reduziert werden kann.

Die erfindungsgemäße Vorrichtung zur Durchführung des oben beschriebenen Verfahrens weist einen Unterstempel und einen in Richtung des Unterstempels verfahrbaren Oberstempel auf.

Der Unterstempel weist eine gegenüber einem ringförmigen Außenrand des Unterstempels in ihrer Tiefe einstellbare, muldenförmige Auflagefläche auf.

Der Oberstempel weist eine Andruckfläche auf, deren Durchmesser kleiner ist als der Innendurchmesser des ringförmigen Außenrandes des Unterstempels.

Dadurch ist ermöglicht, durch Aufsetzen des Oberstempels auf die in den Unterstempel eingelegte Radbremsscheibe die Radbremsscheibe entgegen ihrer Schirmung zu Überdrücken.

Gemäß einer vorteilhaften Ausführungsvariante ist der Unterstempel mehrteilig ausgebildet, mit einem den ringförmigen Außenrand des Unterstempels bildenden Außenring und wenigstens einem in den Außenring einlegbaren Innenring.

Dabei ist die Dicke des Außenrings größer als die Dicke des Innenrings, wobei bei auf dem Außenring aufliegender Bremsscheibe diese in einem gewünschten, vorbestimmten Maß entgegen der Schirmung zum Innenring des Unterstempels hin überdrückbar ist.

Gemäß einer besonders bevorzugten Ausführungsvariante weist die Vorrichtung eine Vielzahl solcher Innenringe gleichen Durchmessers, aber unterschiedlicher Dicken auf.

Dadurch ist ermöglicht, Radbremsscheiben mit unterschiedlich stark ausgeprägter Schirmung mit der Vorrichtung hinreichend zu überdrücken. Die Höhe der Stufe zwischen dem Innenring und dem Außenring des Unterstempels ist dabei durch Austausch und Einsetzen eines Innenrings mit vorbestimmter Dicke in einfacher Weise möglich.

Denkbar ist auch, den Außenring auf einen beispielsweise hydraulisch verfahrbaren Innenring oder Innenzylinder aufzulegen, wobei der Innenring bzw. Innenzylinder je nach Maß der Schirmung der zu bearbeitenden Radbremsscheibe eine geeignete Stufe zur Auflagefläche des Außenrings bildet.

Anstelle einer solchen Stufe im Unterstempel zwischen Außenring und Innenring ist es auch denkbar, dass die Auflagefläche des Unterstempels radial nach innen stetig abfallend geformt ist.

Nachfolgend wird die Erfindung anhand der beiliegenden Zeichnungen näher erläutert. Es zeigen:
- Fig. 1: eine perspektivische Darstellung eines Außenrings einer Vorrichtung,
- Fig. 2: eine Schnittansicht durch den Außenring entlang einer in Fig. 1 mit II-II bezeichneten Linie,
- Fig. 3: eine Vergrößerungsansicht des in Fig. 2 gezeigten Schnitts des Außenrings,
- Fig. 4: eine perspektivische Darstellung eines beschleiften Innenrings und
- Fig. 5: eine perspektivische Darstellung einer Ausführungsvariante eines Oberstempels der Vorrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Radbremsscheibe, des Außenring, des Innenrings, des Oberstempels und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

Bei dem erfindungsgemäßen Verfahren wird nach Feststellen einer Abweichung einer Reibfläche der Radbremsscheibe aus einer durch einen Umfangsrand der Reibfläche aufgespannten Ebene die Reibfläche der Radbremsscheibe in die durch den Umfangsrand der Reibfläche aufgespannten Ebene dauerhaft zurückverformt.

Als "Abweichung einer Reibfläche der Radbremsscheibe aus einer durch einen Umfangsrand der Reibfläche aufgespannten Ebene" wird hier eine Verformung der Reibfläche der Radbremsscheibe aus einem ursprünglich planen Zustand, bei der die Reibfläche in einer durch den Umfangsrand der Reibfläche aufgespannten Ebene liegt, in einen Zustand, bei dem die Reibfläche zumindest teilweise aus dieser Ebene hervorsteht und insbesondere tellerförmig gewölbt ist.

Dabei kann das Feststellen einer solchen Abweichung der Reibfläche der Radbremsscheibe aus einer durch einen Umfangsrand der Reibfläche aufgespannten Ebene beispielsweise in Gestalt einer statistischen Analyse gebrauchter Radbremsscheibe erfolgen. Bei einer solchen statistischen Analyse wird beispielsweise festgestellt, dass alle Radbremsscheiben nach Gebrauch eine Abweichung zeigen, die in einem bestimmten Intervall liegt, beispielsweise in einem Intervall von 0,4mm bis 0,7 mm.

Alternativ kann das Feststellen einer solchen Abweichung der Reibfläche der Radbremsscheibe aus einer durch einen Umfangsrand der Reibfläche aufgespannten Ebene auch durch jeweilige Sichtprüfung mit oder ohne anschließende Vermessung der Radbremsscheibe erfolgen.

Schließlich ist auch eine Messung einer solchen Abweichung der Reibfläche der Radbremsscheibe aus einer durch einen Umfangsrand der Reibfläche aufgespannten Ebene als Bestandteil eines Verfahrens zur Verringerung der infolge von Bremsvorgängen aufgetretenen Schirmung einer Radbremsscheibe für ein Schienenfahrzeug denkbar.

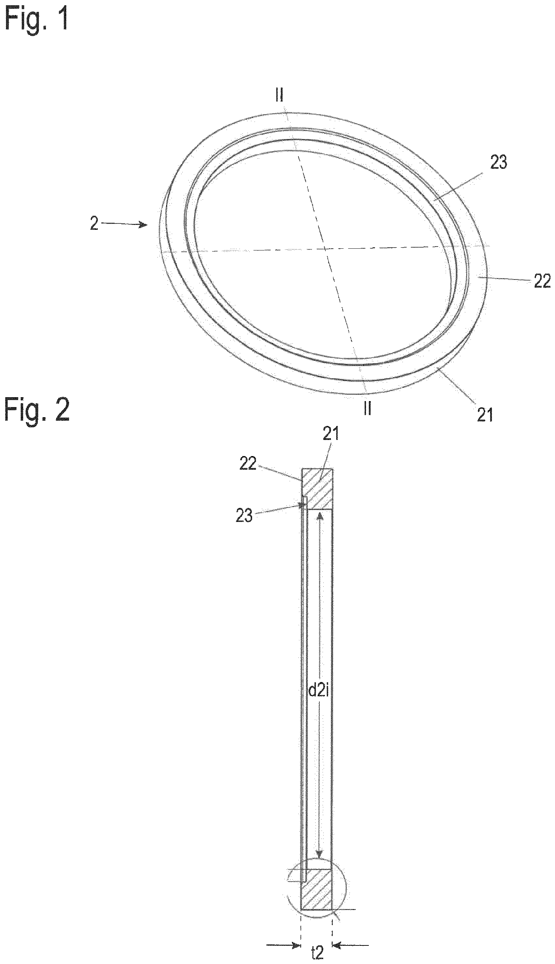

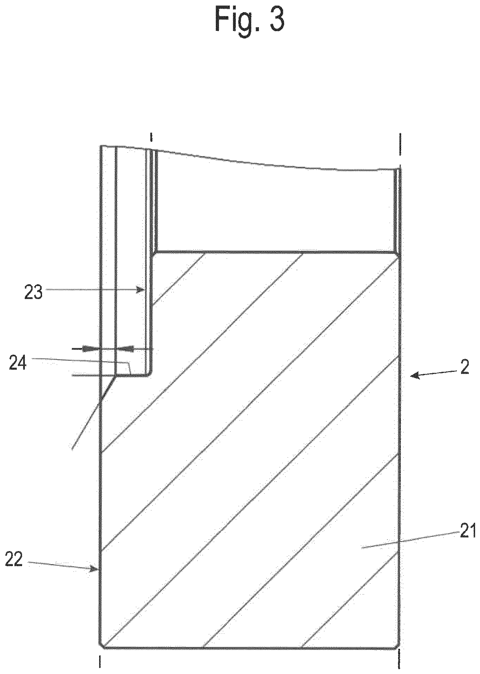

In den **Figuren 1 bis 5** sind Bauteile einer Vorrichtung zur Durchführung eines Verfahrens zur Verringerung der infolge von Bremsvorgängen aufgetretenen Schirmung einer Radbremsscheibe für ein Schienenfahrzeug dargestellt.

Die Figuren 1-3 zeigen dabei einen Außenring 2 als Bauteil eines Unterstempels der Vorrichtung.

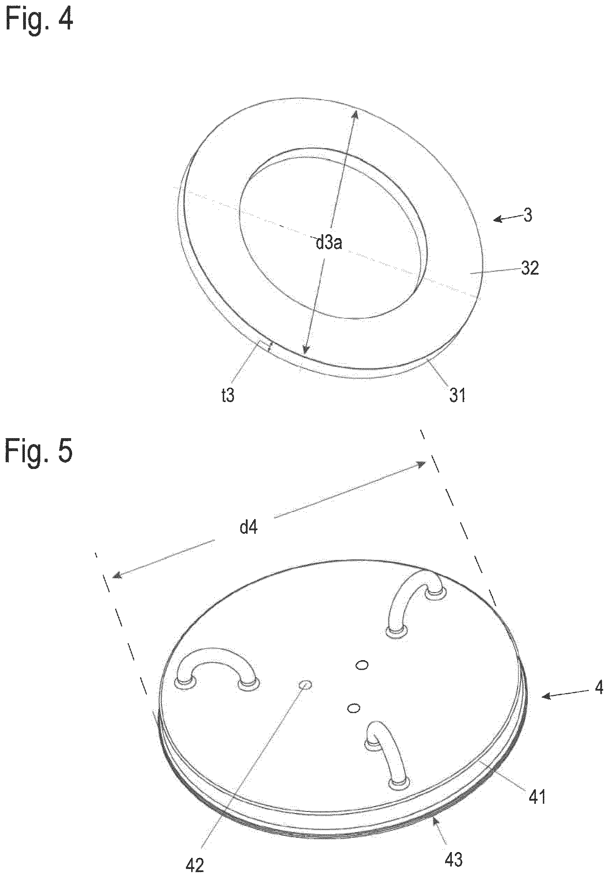

Fig. 4 zeigt einen in den Außenring 2 einlegbaren Innenring 3 als Teil des Unterstempels der Vorrichtung.

Fig. 5 zeigt einen Oberstempel 4, der dazu dient, eine geschirmte oder getellerte Radbremsscheibe (nicht gezeigt) nach Einlegen in den in den Figuren 1-4 gezeigten Unterstempel aufzulegen und durch Andrücken des Oberstempels 4 in einer Richtung senkrecht zur Andruckfläche 43 des Oberstempels 4 die Radbremsscheibe zu überdrücken.

Wie in den Figuren 1-3 gezeigt, weist der Außenring 2 einen ringförmigen Grundkörper 21 auf, der in einem radial inneren Bereich abgestuft ausgebildet ist. Der Bereich des Außenrings 2 mit der radial äußeren Außenstufe 22 weist dabei eine Dicke t₂ auf, die größer ist als eine Dicke t₃ des in Fig. 4 beispielhaft gezeigten Innenrings 3.

Die Dicken werden dabei in einer Richtung senkrecht zu einer durch den Umfangsrand des Außenrings 2 bzw. des Innenrings 3 aufgespannten Ebene gemessen.

Der Innenring 3 besteht in der hier gezeigten Ausführungsvariante aus einem Ringkörper 31 mit zylindrischem Außen- und Innenrand sowie einer ebenen Lagerfläche 32. Die Dicke t₃ des Innenrings 3 ist hier über den gesamten Ringkörper 31 hin konstant.

Die eine innere Stufe des Außenrings 2 ist als Lagerfläche 23 zur Auflage eines radial äußeren Bereichs einer zu bearbeitenden Radbremsscheibe ausgebildet.

Der senkrecht zur Lagerfläche 23 ausgebildete Innenrand 24 am Übergang zur Außenstufe 22 dient dabei der exakt konzentrischen Auflage der zu bearbeitenden Radbremsscheibe.

Der Durchmesser d₂ᵢ der Ringöffnung des Außenrings 2 ist bevorzugt so bemessen, dass der Innenring 3 exakt bzw. nahezu spielfrei in diesen einlegbar ist, um eine konzentrische Anordnung des Außenrings 2 zum Innenring 3 zu gewährleisten.

Die Vorrichtung weist bevorzugt eine Vielzahl von solchen Innenringen 3 auf, die sich lediglich in ihren Dicken t₃ voneinander unterscheiden, so dass je nach Maß der Schirmung der Radbremsscheibe ein entsprechender Innenring 3 in den Außenring 2 eingelegt werden kann, wobei die Dicke des Innenrings 3 das Maß der Überdrückung der Radbremsscheibe durch den Oberstempel 4 bestimmt.

Neben den hier gezeigten Ausführungsvarianten des Außenrings 2 und des Innenrings 3 ist es auch denkbar, die Lagerfläche 23 des Außenrings 2 und/oder die Lagerfläche 32 des Innenrings 3 radial nach innen stetig abfallend zu formen.

Denkbar ist auch, anstelle des Innenrings 3 einen Unterstempel bereitzustellen, der eine gegenüber einem ringförmigen Außenrand des Unterstempels in ihrer Tiefe einstellbare, muldenförmige Auflagefläche aufweist, die beispielsweise hydraulisch relativ zur Lagerfläche 23 des Außenrings 2 in ihrer Höhe entsprechend dem Maß der Schirmung der zu bearbeitenden Radbremsscheibe einstellbar ist.

Bei dem erfindungsgemäßen Verfahren zur Verringerung der Schirmung einer Radbremsscheibe für ein Schienenfahrzeug wird bevorzugt in einem ersten Schritt die Abweichung einer Reibfläche der Radbremsscheibe aus einer durch einen Umfangsrand der Reibfläche aufgespannten Ebene gemessen. Denkbar ist auch, wie weiter oben erwähnt, die Abweichung vorab statistisch zu erfassen.

Daraufhin wird der Unterstempel derart ausgerichtet, dass eine Auflagefläche des Unterstempels umgekehrt zur Schirmung der Radbremsscheibe eine Mulde ausbildet. Die Tiefe der Mulde wird dabei in Abhängigkeit von der Abweichung der Reibfläche der Radbremsscheibe aus der durch den Umfangsrand der Reibfläche aufgespannten Ebene eingestellt.

Danach wird die Radbremsscheibe in den Unterstempel so eingelegt, dass die Schirmung bzw. Tellerung von dem Unterstempel weg in Richtung des auf die Radbremsscheibe anschließend abzusenkenden Oberstempels 4 zeigt.

Die Radbremsscheibe liegt dabei mit einem radial äußeren Rand der der Reibfläche der Radbremsscheibe abgewandten Unterseite auf.

Schließlich wird der Oberstempel 4 auf eine radial innere Teilfläche der Reibfläche der Radbremsscheibe abgesenkt, bis die radial innere Teilfläche der Reibfläche der Radbremsscheibe auf der Auflagefläche des Unterstempels aufliegt bzw. diese berührt.

Durch diese Überdrückung der Radbremsscheibe werden die aufgrund der Erhitzung infolge von Bremsvorgängen erzeugten Eigenspannungen in der Radbremsscheibe mechanisch zurückgeformt.

Dadurch ist ermöglicht, dass die Radbremsscheibe nach erfolgtem Überdrücken erneut an einem Schienenrad eines Schienenfahrzeugs befestigt, insbesondere verschraubt werden kann.

Das Ausrichten des Unterstempels erfolgt dabei im Falle des in den Figuren 1-4 gezeigten zweiteiligen Unterstempels derart, dass der Innenring 3 oder auch eine kreisförmige Innenauflage und ein diesen bzw. diese umschließender Außenring 2 derart ausgerichtet werden, dass eine ringförmige Lagerfläche 23 des Außenrings 2 gegenüber dem Innenring 3 bzw. der kreisförmigen Innenauflage um ein dem gemessenen Schirmungs- bzw. Tellerungsmaß angepasstes Maß erhöht ist.

Denkbar ist auch, den Unterstempel wegzulassen und den Oberstempel 4 auf eine radial innere Teilfläche der Reibfläche der Radbremsscheibe um ein vorbestimmtes Maß abzusenken, um die Reibfläche der Radbremsscheibe in ihre plane Ursprungsform zurückzuformen.

Bei besonders ausgeprägter Schirmung der Radbremsscheibe ist es auch denkbar, vor dem Einlegen der Radbremsscheibe in den Unterstempel die Reibfläche der Radbremsscheibe zur Reduzierung von oberflächennahen Eigenspannungen zunächst oder auch in einem sich an die Überdrückung anschließenden Verfahrensschritt spanend zu bearbeiten.

### Bezugszeichenliste

- 2: Außenring
- 21: Ringkörper
- 22: Außenstufe
- 23: Lagerfläche
- 24: Innenrand

- 3: Innenauflage
- 31: Ringkörper
- 32: Lagerfläche

- 4: Oberstempel
- 41: Druckstück
- 42: Bohrung
- 43: Andruckfläche

- d₂ᵢ: Innendurchmesser
- d₃ₐ: Außendurchmesser
- d₄: Außendurchmesser

- t₂: Dicke
- t₃: Dicke

## Patentansprüche

1. Verfahren zur Verringerung der infolge von Bremsvorgängen aufgetretenen Schirmung einer Radbremsscheibe für ein Schienenfahrzeug, bei dem nach Feststellen einer Abweichung einer Reibfläche der Radbremsscheibe aus einer durch einen Umfangsrand der Reibfläche aufgespannten Ebene die Reibfläche der Radbremsscheibe in die durch den Umfangsrand der Reibfläche aufgespannten Ebene dauerhaft zurückverformt wird.

2. Verfahren nach Anspruch 1, mit den Verfahrensschritten:
a) Einlegen der Radbremsscheibe in einen Unterstempel;
b) Absenken eines Oberstempels (4) auf eine radial innere Teilfläche der Reibfläche der Radbremsscheibe, bis die radial innere Teilfläche der Reibfläche der Radbremsscheibe in die durch den Umfangsrand der Reibfläche aufgespannten Ebene zurückverformt ist.

3. Verfahren nach Anspruch 2, wobei vor Schritt a) ein Ausrichten des Unterstempels derart erfolgt, dass eine Auflagefläche des Unterstempels umgekehrt zur Schirmung der Radbremsscheibe eine Mulde ausbildet, wobei die Tiefe der Mulde in Abhängigkeit von der Abweichung der Reibfläche der Radbremsscheibe aus der durch den Umfangsrand der Reibfläche aufgespannten Ebene eingestellt wird.

4. Verfahren nach Anspruch 3, wobei ein Ausrichten eines zweiteiligen Unterstempels mit einer kreis- oder kreisringförmigen Innenauflage (3) und einem die Innenauflage (3) umschließenden Außenring (2) derart erfolgt, dass eine ringförmige Lagerfläche (23) des Außenrings (2) gegenüber der Innenauflage (3) um ein dem gemessenen Schirmungs- bzw. Tellerungsmaß angepasstes Maß erhöht ist.

5. Verfahren nach Anspruch 4, wobei in Schritt b) der Oberstempel (4) auf den radial inneren Randbereich der Reibfläche der Radbremsscheibe so weit abgesenkt wird, bis der radial innere Randbereich der Reibfläche der Radbremsscheibe auf der Innenauflage (3) aufliegt.

6. Verfahren nach einem der vorhergehenden Ansprüche, wobei vor Schritt a) einer Abweichung einer Reibfläche der Radbremsscheibe aus einer durch einen Umfangsrand der Reibfläche aufgespannten Ebene gemessen wird.

7. Verfahren nach einem der vorhergehenden Ansprüche, wobei vor Schritt a) die Reibfläche der Radbremsscheibe zur Reduzierung von oberflächennahen Eigenspannungen spanend bearbeitet wird.

8. Vorrichtung zur Durchführung eines Verfahrens nach einem der vorhergehenden Ansprüche, aufweisend einen Unterstempel und einen in Richtung des Unterstempels verfahrbaren Oberstempel (4), **dadurch gekennzeichnet, dass** der Unterstempel eine gegenüber einem ringförmigen Außenrand des Unterstempels in ihrer Tiefe einstellbare muldenförmige Auflagefläche aufweist, und dass der Oberstempel (4) eine Andruckfläche (43) aufweist, deren Durchmesser (d₄) kleiner ist als der Innendurchmesser (d₂ᵢ) des ringförmigen Außenrandes des Unterstempels.

9. Vorrichtung nach Anspruch 8, **dadurch gekennzeichnet, dass** der Unterstempel mehrteilig ausgebildet ist, mit einem den ringförmigen Außenrand des Unterstempels bildenden Außenring (2) und wenigstens einem in den Außenring einlegbaren Innenring (3), wobei die Dicke (t₂) des Außenrings größer ist als die Dicke (t₃) des Innenrings (3), wobei bei auf dem Außenring (2) aufliegender Bremsscheibe diese in einem gewünschten, vorbestimmten Maß entgegen der Schirmung zum Innenring (3) des Unterstempels hin überdrückbar ist.

10. Vorrichtung nach Anspruch 9, **gekennzeichnet durch** eine Vielzahl von Innenringen (3) gleichen Durchmessers, aber unterschiedlicher Dicken.

11. Vorrichtung nach einem der Ansprüche 8 bis 10, **dadurch gekennzeichnet, dass** die Auflagefläche des Unterstempels radial nach innen stufig abfallend geformt ist.

12. Vorrichtung nach einem der Ansprüche 8 bis 10, **dadurch gekennzeichnet, dass** die Auflagefläche des Unterstempels radial nach innen stetig abfallend geformt ist.

## Claims

1. A method for reducing the flattening of a wheel brake disk for a rail vehicle which has occurred as a result of braking operations, wherein, after determining a deviation of a friction face of the wheel brake disk from a plane defined by a peripheral edge of the friction face, the friction face of the wheel brake disk is permanently deformed back into the plane defined by the peripheral edge of the friction face.

2. The method as claimed in claim 1, having the method steps of:
a) placing the wheel brake disk in a lower stamp;
b) lowering an upper stamp (4) onto a radially inner part-face of the friction face of the wheel brake disk until the radially inner part-face of the friction face of the wheel brake disk is deformed back into the plane defined by the peripheral edge of the friction face.

3. The method as claimed in claim 2, wherein prior to step a) an orientation of the lower stamp is carried out in such a manner that a support face of the lower stamp counter to the flattening of the wheel brake disk forms a recess, wherein the depth of the recess is adjusted in accordance with the deviation of the friction face of the wheel brake disk from the plane defined by the peripheral edge of the friction face.

4. The method as claimed in claim 3, wherein an orientation of a two-part lower stamp with a circle-like or circular inner support (3) and an outer ring (2) which surrounds the inner support (3) is carried out in such a manner that an annular bearing face (23) of the outer ring (2) is increased with respect to the inner support (3) by an extent which is adapted to the measured extent of flattening or warpage.

5. The method as claimed in claim 4, wherein in step b) the upper stamp (4) is lowered onto the radially inner edge region of the friction face of the wheel brake disk until the radially inner edge region of the friction face of the wheel brake disk rests on the inner support (3).

6. The method as claimed in one of the preceding claims, where prior to step a) a deviation of a friction face of the wheel brake disk from a plane defined by a peripheral edge of the friction face is measured.

7. The method as claimed in one of the preceding claims, wherein prior to step a) the friction face of the wheel brake disk is subjected to a machining processing operation in order to reduce near-surface inherent tensions.

8. A device for carrying out a method as claimed in one of the preceding claims, having a lower stamp and an upper stamp (4) which can be displaced in the direction of the lower stamp, **characterized in that** the lower stamp has a recess-like support face which can be adjusted in terms of its depth with respect to an annular outer edge of the lower stamp and **in that** the upper stamp (4) has a pressing face (43) whose diameter (d₄) is smaller than the inner diameter (d₂ᵢ) of the annular outer edge of the lower stamp.

9. The device as claimed in claim 8, **characterized in that** the lower stamp is constructed in several parts, having an outer ring (2) which forms the annular outer edge of the lower stamp and at least one inner ring (3) which can be placed in the outer ring, wherein the thickness (t₂) of the outer ring is greater than the thickness (t₃) of the inner ring (3), wherein, when the brake disk rests on the outer ring (2), excess pressure can be applied to it to a desired, predetermined extent counter to the flattening toward the inner ring (3) of the lower stamp.

10. The device as claimed in claim 9, **characterized by** a large number of inner rings (3) of the same diameter but with different thicknesses.

11. The device as claimed in one of claims 8 to 10, **characterized in that** the support face of the lower stamp is formed so as to decline in a stepped manner in a radially inward direction.

12. The device as claimed in one of claims 8 to 10, **characterized in that** the support face of the lower stamp is formed so as to continuously decline in a radially inward direction.

## Revendications

1. Procédé pour diminuer l'effet d'écran, se produisant en raison de freinages, d'un disque de frein de roue d'un véhicule ferroviaire, dans lequel, après constatation d'un écart entre une surface de frottement du disque de frein de roue à un plan passant par un bord du pourtour de la surface de frottement, on reforme, de manière permanente, la surface de frottement du disque de frein de roue dans le plan passant par le bord de pourtour de la surface de frottement.

2. Procédé suivant la revendication 1, comprenant les stades :
a) on met le disque de frein de roue dans un poinçon inférieur ;
b) on abaisse un poinçon (4) supérieur sur une surface partielle intérieure radialement de la surface de frottement du disque de frein de roue, jusqu'à ce que la surface partielle intérieure radialement de la surface de frottement du disque de frein de roue soit reformée dans le plan passant par le bord de pourtour de la surface de frottement.

3. Procédé suivant la revendication 2, dans lequel, avant le stade a), on effectue une orientation du poinçon inférieur, de manière à ce qu'une surface d'application du poinçon inférieur constitue à l'inverse de l'effet d'écran du disque de frein de roue une cavité, la profondeur de la cavité étant réglée en fonction de l'écart de la surface de frottement du disque de frein de roue au plan passant par le bord de pourtour de la surface de frottement.

4. Procédé suivant la revendication 3, dans lequel on effectue une orientation d'un poinçon inférieur en deux parties ayant un appui (3) intérieur en forme de cercle ou d'anneau de cercle et un anneau (2) extérieur entourant l'appui (3) intérieur, de manière à ce qu'une surface (23) annulaire de portée de l'anneau (2) extérieur ait, par rapport à l'appui (3) intérieur, une dimension adaptée à la dimension mesurée de l'effet d'écran ou de l'effet d'assiette.

5. Procédé suivant la revendication 4, dans lequel au stade b), on abaisse le poinçon (4) supérieur sur la partie de bord intérieur radialement de la surface de frottement du disque de frein de roue, jusqu'à ce que la partie de bord intérieur radialement de la surface de frottement du disque de frein de roue s'applique à l'appui (3) intérieur.

6. Procédé suivant l'une des revendications précédentes, dans lequel avant le stade a), on mesure un écart d'une surface de frottement du disque de frein de roue à un plan passant par le bord de pourtour de la surface de frottement.

7. Procédé suivant l'une des revendications précédentes, dans lequel avant le stade a), on usine avec enlèvement de copeaux la surface de frottement du disque de frein de roue pour réduire des tensions propres près de la surface.

8. Installation pour effectuer un procédé suivant l'une des revendications précédentes, comportant un poinçon inférieur et un poinçon (4) supérieur pouvant être déplacé en direction du poinçon inférieur, **caractérisée en ce que** le poinçon inférieur a une surface d'appui en forme de cavité de profondeur réglable par rapport à un bord extérieur annulaire du poinçon inférieur et **en ce que** le poinçon (4) supérieur a une surface (43) d'application d'une pression, dont le diamètre (d₄) est plus petit que le diamètre (d₂ᵢ) intérieur du bord extérieur annulaire du poinçon inférieur.

9. Installation suivant la revendication 8, **caractérisée en ce que** le poinçon₂ inférieur est constitué en plusieurs parties en ayant un anneau (2) extérieur, formant le bord extérieur annulaire du poinçon inférieur, et au moins un anneau (3) intérieur pouvant être mis dans l'anneau extérieur, dans laquelle l'épaisseur (t₂) de l'anneau extérieur est plus grande que l'épaisseur (t₃) de l'anneau (3) intérieur, dans laquelle lorsque le disque de frein s'applique à l'anneau (2) extérieur, ce disque peut être pressé dans une mesure souhaitée définie à l'avance à l'encontre de l'effet d'écran sur l'anneau (3) intérieur du poinçon inférieur.

10. Installation suivant la revendication 9, **caractérisée par** une pluralité d'anneaux (3) intérieurs de même diamètre, mais d'épaisseurs différentes.

11. Installation suivant l'une des revendications 8 à 10, **caractérisée en ce que** la surface d'appui du poinçon inférieur est conformée en s'abaissant par paliers vers l'intérieur radialement.

12. Installation suivant l'une des revendications 8 à 10, **caractérisée en ce que** la surface d'appui du poinçon inférieur est déformée en s'abaissant d'une manière continue vers l'intérieur radialement.
